Europäisches Patentamt

European Patent Office

Office européen des brevets

(19)

(11) Numéro de publication : **0 296 010 B1**

(12) **FASCICULE DE BREVET EUROPEEN**

(45) Date de publication du fascicule du brevet :
**25.09.91 Bulletin 91/39**

(51) Int. Cl.⁵ : **B64D 1/04, B64D 7/08**

(21) Numéro de dépôt : **88401349.1**

(22) Date de dépôt : **03.06.88**

(54) **Dispositif d'emport et de largage d'une charge telle qu'un missile.**

(30) Priorité : **05.06.87 FR 8707889**

(43) Date de publication de la demande :
**21.12.88 Bulletin 88/51**

(45) Mention de la délivrance du brevet :
**25.09.91 Bulletin 91/39**

(84) Etats contractants désignés :
**DE ES GB IT NL**

(56) Documents cités :
**EP-A- 0 039 391**
**EP-A- 0 247 712**
**FR-A- 1 493 288**
**FR-A- 2 573 383**
**US-A- 3 040 629**

(73) Titulaire : **R. ALKAN & Cie.**
**Rue du 8 mai 1945**
**F-94460 Valenton (FR)**

(72) Inventeur : **Grosselin, Daniel**
**3 avenue Maurice de Vlamynk**
**F-77680 Roissy (FR)**
Inventeur : **Coutin, Pierre**
**117 avenue Général Michel Bizot**
**F-75012 Paris (FR)**

(74) Mandataire : **Hud, Robert**
**Cabinet COLLIGNON 6, rue de Madrid**
**F-75008 Paris (FR)**

## Description

L'invention se situe dans le domaine de l'armement, ou dans celui des dispositifs de sondage atmosphérique. Elle a pour objet un dispositif d'emport d'une charge telle qu'un missile sous un organe porteur, en particulier sous un élément (aile ou fuselage) d'un aéronef, ce dispositif devant larguer la charge et accessoirement l'éjecter, c'est-à-dire l'écarter rapidement de l'organe porteur. A la suite de ce largage, la charge peut ou non être autopropulsée.

Par le brevet des Etats-Unis d'Amérique N° 3040629, on connaît un dispositif d'emport pour un missile équipé d'oreilles d'accrochage avant et arrière. Ce dispositif comprend des rails d'accrochage portés par l'organe porteur dans lesquels s'engagent les oreilles du missile par coulissement de celui-ci le long des rails. Le dégagement du missile s'effectue par la force d'autopropulsion de celui-ci, après qu'un dispositif de blocage ait été mis hors d'action. En outre des coins de calage viennent rattraper les jeux entre oreilles et rails, pour éviter tout mouvement parasite du missile relativement à l'organe porteur jusqu'au moment du dégagement. De plus des connections électriques par appui local sont prévues entre l'organe porteur et le missile.

Ce dispositif présente l'inconvénient de ne pas être utilisable pour le largage d'une charge inerte.

Par le brevet français publié sous le N° 2573383, on connaît d'autre part un dispositif d'emport et d'éjection d'une charge retenue sous un organe porteur par des oreilles. Pour effectuer le largage, après déverrouillage d'un organe de sécurité, le dégagement des oreilles d'avec des rails fixes de l'organe porteur se fait par une séquence de translation-arrêt de la charge elle-même au moyen d'un système combiné comprenant un vérin pneumatique pour la translation de la charge et un amortisseur pour l'arrêt de celle-ci. En outre, des vérins pneumatiques d'éjection sont actionnés par le même système combiné, ceci dès la fin de la séquence d'arrêt.

Le dispositif du brevet français N° 2573383 présente l'inconvénient de nécessiter une mise en mouvement de toute la masse du missile, suivie immédiatement d'un arrêt, ce qui demande la mise en oeuvre d'une énergie importante et peut causer, tant à l'organe porteur qu'au missile lui-même, des efforts et même des chocs préjudiciables.

La présente invention a pour objet de remédier aux inconvénients exposés ci-dessus des systèmes connus et elle propose à cet effet un dispositif permettant de résoudre le problème du largage d'une charge telle qu'un missile par des efforts de commande modérés et sans déplacement de la charge.

Selon l'invention le dispositif d'emport et de largage comprend un organe porteur supportant un équipage mobile qui est conçu pour coopérer avec des oreilles d'accrochage de la charge et qui peut se déplacer le long de glissières longitudinales avant et arrière de l'organe porteur alors que des butées présentées par l'organe porteur et coopérant avec la charge empêchent toute translation de celle-ci en position d'emport et lors de la phase de largage, de sorte que le déplacement de l'équipage mobile dans ses glissières libère les oreilles de la charge d'avec l'équipage mobile pour assurer le largage de la charge, et il se caractérise en ce que l'organe porteur est fixé rigidement à l'aéronef, et en ce que le déplacement dudit équipage mobile vers sa position de largage est réalisé par décharge à travers un conduit d'alimentation d'un gaz sous pression sur un piston de commande placé longitudinalement dans l'organe porteur, ledit conduit d'alimentation en fin de course de largage étant mis en communication avec un conduit menant à un système d'éjection.

Avantageusement, pour éviter les oscillations de la charge dans un plan transversal, des coins de calage sont associés à l'organe porteur pour agir entre celui-ci et l'oreille équipant la charge, à l'avant et/ou l'arrière de celle-ci

Pour faciliter le déplacement de l'équipage mobile le long des glissières longitudinales de l'organe porteur, en particulier pour éviter des coincements en cas d'utilisation des coins de calage, lesdites glissières longitudinales avant et/ou arrière de l'organe porteur présentent une légère inclinaison dans un sens tel que le glissement de largage admette une composante d'écartement de la charge d'avec l'organe porteur.

Selon une caractéristique supplémentaire de l'invention, l'une au moins desdites butées peut s'éclipser à l'intérieur de l'organe porteur contre l'action d'un ressort de rappel, lors de son engagement par une oreille de la charge.

Avantageusement on peut prévoir un organe de commande manuelle de la butée éclipsable. Ladite commande manuelle de la butée éclipsable agit sur un organe pivotant commandant un déplacement de retrait d'un organe de connexion électrique.

La butée éclipsable est reliée par une tringlerie à un coin de calage pour écarter ledit coin de calage lorsque la butée est éclipsée et laisser revenir ledit coin en position de calage lors de la libération de la butée.

Selon une autre caractéristique de l'invention, le dispositif peut comprendre un levier de sécurité manoeuvrable manuellement et qui comporte un doigt qui, en position de sécurité dudit organe, verrouille l'équipage mobile dans sa position d'emport. Ledit levier de sécurité présente une saillie qui, dans la position de sécurité dudit levier, bloque positivement la butée éclipsable dans sa position non éclipsée.

Le piston comporte intérieurement un circuit de retour qui, en position du piston correspondant à la position d'emport de l'équipage mobile, met en commnunication le conduit menant au système d'éjection et le conduit d'alimentation à travers un clapet à bille qui s'oppose au passage de gaz moteur du conduit d'alimentation vers le conduit menant au système d'éjection.

Pour bien faire comprendre le dispositif selon l'invention, on en décrira ci-après, à titre d'exemple sans caractère limitatif, une forme d'exécution préférée en référence au dessin schématique annexé dans lequel :

la figure 1 est un schéma simplifié, en perspective, d'un dispositif d'emport et de largage de missile selon l'invention, vu de dessous ;

les figures 2 et 3 sont des vues partielles en coupe verticale, respectivement de la partie avant et de la partie arrière d'un missile à emporter, montrant plus particulièrement les oreilles d'accrochage équipant celui-ci ;

la figure 4 est une coupe verticale longitudinale partielle du dispositif de la figure 1, en position de sécurité ; et

la figure 5 est un schéma en coupe verticale montrant plus spécialement le vérin de largage et d'éjection.

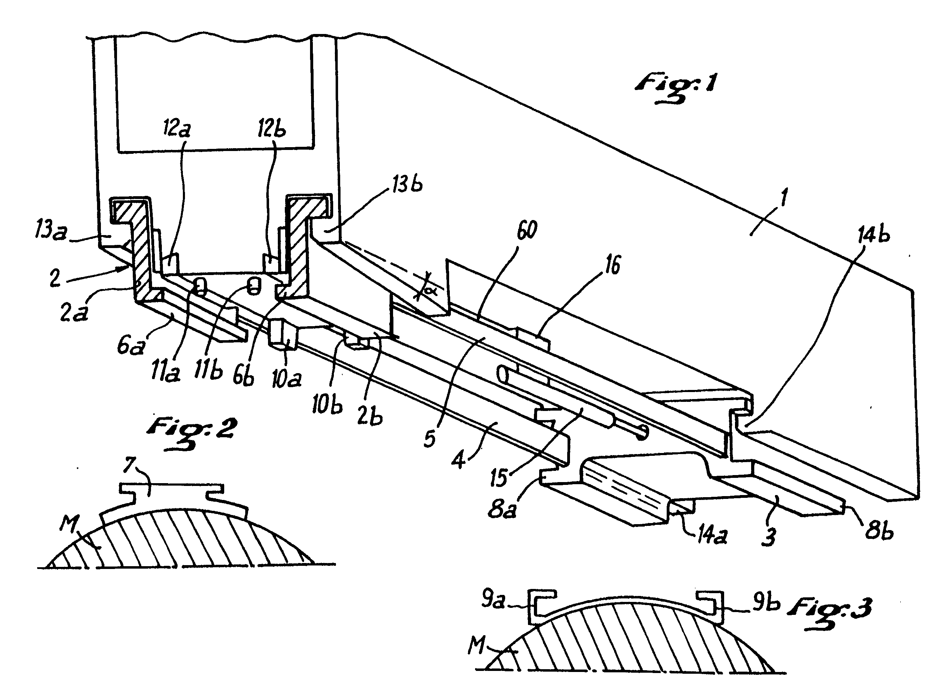

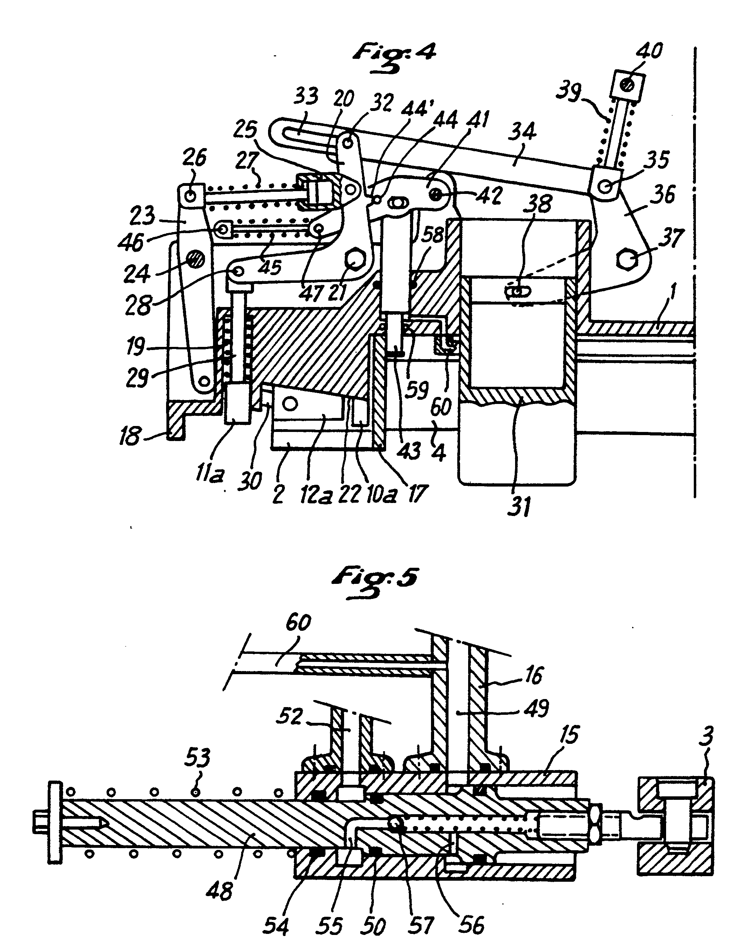

En référence plus particulièrement à la figure 1 le dispositif selon l'invention comporte un organe porteur 1, fixé sous un aéronef (non représenté au dessin) et constitué d'un ensemble rigide parallélépipèdique allongé et creusé pour recevoir des organes non représentés, par exemple des organes d'éjection du type de ceux décrits dans la demande de brevet français N° 86.05517 mentionnée ci-dessus. L'organe porteur 1 supporte un équipage mobile monobloc formé d'un rail avant 2, constitué de deux parties 2a et 2b solidarisées par une traverse 17 (visible à la figure 4) et relié à un rail arrière 3 par deux éléments rigides de liaison 4 et 5.

Le rail avant 2a, 2b comporte des retours 6a, 6b en regard l'un de l'autre et qui sont destinés à recevoir l'oreille 7 du support avant d'un missile M, oreille visible à la figure 2 et qui dans cet exemple présente en section une forme en T. Le rail arrière 3 comporte des retours 8a, 8b dirigés vers l'extérieur, qui sont conçus pour coopérer avec des oreilles 9a, 9b du support arrière du missile M qui se font vis-à-vis (voir figure 3).

Par ailleurs, le missile est retenu en position fixe relativement à l'organe porteur 1 d'une part au moyen de butées arrière 10a, 10b qui font partie de cet organe et qui sont destinées à coopérer avec l'arrière de l'oreille 7 du missile et, d'autre part, au moyen de butées éclipsables 11a, 11b positionnées juste en avant de l'oreille 7 en position d'emport du missile. On comprend que, pour accrocher le missile M dans ses rails 2, 3, il y aura lieu d'abord de le soulever sous l'organe porteur 1 en position un peu avancée de sorte que l'arrière de l'oreille 7 soulève les butées 11a et 11b qui s'éclipsent dans l'organe porteur. On peut alors reculer le missile en engageant les oreilles de celui-ci dans les rails avant et arrière jusqu'à ce que l'oreille arrive contre les butées arrière 10a, 10b. Les butées 11a et 11b se trouvant alors dégagées ressortent pour former une butée en avant de l'oreille 7.

On a représenté d'autre part en 12a et 12b des coins de calage associés à la partie avant de l'organe porteur 1 et destinés à appuyer contre la face supérieure de l'oreille 7 du missile. Le mécanisme de mise en action de ces coins de calage sera expliqué plus loin en référence à la figure 4.

Le largage du missile, retenu en position fixe de la façon expliquée ci-dessus, se réalise par recul vers l'arrière de l'équipage mobile formé des rails 2, 3 et des éléments de liaison 4, 5. A cet effet les rails 2, 3 coulissent dans des glissières avant 13a, 13b et arrière 14a, 14b présentées par l'organe porteur 1, en effectuant un mouvement de recul jusqu'à ce que les oreilles 7, 9a, 9b soient dégagées des rails correspondants. Ce recul s'effectue sous l'action d'un vérin pneumatique 15 fixé à l'organe porteur 1 par un élément 16 qui, comme cela sera détaillé plus loin, comporte l'arrivée de gaz moteur sous pression.

On notera que, pour éviter que les coins de calage 12a, 12b puissent s'opposer à ce mouvement de recul par une action de coincement, les glissières correspondantes 13a, 13b sont inclinées d'un petit angle α qui assure le dégagement de l'oreille 7 d'avec les coins.

Comme on le voit à la figure 4, l'organe porteur 1 présente à son extrémité avant un bec transversal 18. Celui-ci a pour fonction de préciser la position un peu avancée que doit prendre le missile pour réaliser son accrochage, en déterminant alors la position de la face avant de l'oreille 7. Cette dernière, non représentée sur la figure 4, est ainsi introduite entre le bec 18 et l'extrémité avant du rail 2 et sa face supérieure vient repousser la butée éclipsable 11a contre l'action d'un ressort de rappel 19.

Un levier coudé 20, axé à sa partie intermédiaire en 21 sur l'organe porteur 1, est articulé en 28 à un prolongement 29 de la butée 11a. Ce levier 20 est relié, par l'intermédiaire d'un dispositif à chape 25, tirant 26 et ressort 27, à une extrémité d'un levier basculeur 23 articulé en 24 sur l'organe porteur 1 et dont l'autre extrémité est reliée, par une bielle 30, au coin de calage 12a qui glisse le long d'une rampe inclinée 22 de l'organe porteur 1. On comprend que l'effacement de la butée 11a, lors de la mise en position d'accrochage de l'oreille 7 du missile, commande alors la rétraction du coin de calage 12a. Le dispositif à chape 25, tirant 26 et ressort 27 procure une possiblité de compression de ce ressort 27 et donc d'appui variable du coin 12a sous l'action coordonnée des ressorts 19 et 27 lorsque, en position d'emport du missile, la butée 11a n'est pas éclipsée.

D'autre part le levier coudé 20, lors de l'effacement de la butée 11a, vient relever un connecteur électrique éclipsable 31 qui coulisse dans un logement de l'organe porteur 1. A cet effet un axe 32 porté par l'extrémité du levier coudé 20 est engagé dans un trou oblong 33 ménagé dans une bielle 34 articulée en 35 à une extrémité d'un levier coudé 36 qui est axé en 37 sur l'organe porteur 1 et dont l'autre extrémité est articulée en 38 au connecteur 31. Un ressort 39, venant en butée sur une chape articulée en 40 à l'organe porteur 1 et s'appuyant sur l'articulation 35, assure le maintien du connecteur 31 en position relevée lorsque le point d'articulation 35 franchit l'alignement des axes 37 et 40. Le trou oblong 33 ménagé dans la bielle 34 permet alors un libre débattement du levier coudé 20.

En usage normal, le connecteur 31 est relevé manuellement par une action de rotation exercée sur l'axe 37 qui est prolongé à cet effet par un trou à six pans ou un moyen analogue. Le connecteur 31 ne peut être abaissé, et donc connecté, que lorsque la butée 11a est elle-même abaissée car sinon la bielle 34 viendrait buter sur l'axe 32. La butée 11a peut également être manoeuvrée manuellement par action sur l'axe 21, avec un trou à six pans.

Un système de blocage en sécurité de l'ensemble du dispositif est prévu, qui comprend un levier 41 articulé autour d'un axe fixe 42. A ce levier 41, est lié un doigt 43 qui, dans la position de sécurité de ce levier représentée à la figure 4, vient retenir la traverse 17 de l'équipage mobile en position d'emport, en interdisant le mouvement de recul de cet équipage mobile. Le levier 41 est commandé par une manette-clé extérieure (non représentée au dessin) qui, dans la position de sécurité, masque extérieurement l'axe 21. En outre un pion 44, porté en saillie par le levier de sécurité 41, vient coopérer avec une portion 44' du levier coudé 20 pour bloquer celui-ci dans la position de sécurité où la butée 11a est en position basse. Un ressort de compression 45, disposé entre une chape articulée en 46 sur l'organe porteur 1 et l'extrémité du levier 41, assure la stabilité de ce levier dans ses deux positions extrêmes où son extrémité 47 vient de part et d'autre de l'alignement des axes 42 et 46.

Le doigt 43 est constitué par un cylindre à double section, qui coopère avec des joints 58, 59 dans des alésages de l'organe porteur 1, le joint 58 sur la grande section et l'autre joint 59 sur la petite section. Entre ces joints débouche une conduite pneumatique 60, reliée à un conduit 49 d'arrivée de gaz moteur sous pression contenu dans l'élément de fixation 16 et visible aux figures 1 et 5. Sous la pression du gaz moteur le doigt 43 remonte et libère la traverse 17, permettant le largage.

D'autre part une position intermédiaire du levier 41 peut assurer la retenue de la traverse 17 sans bloquer le levier 20 et les doigts 11, ce qui permet l'accrochage du missile tout en évitant le recul de l'équipage mobile monobloc sous l'effet des frottements entre les oreilles et les rails.

En référence à la figure 5, on décrira maintenant le vérin 15 de largage et d'éjection. Le corps de vérin 15 ainsi que le piston 48 sont à triple section, de sorte que le gaz sous forte pression qui arrive par le conduit 49 intérieur à l'élément de fixation 16 agit sur la face avant de la partie de grande section du piston pour pousser vers l'arrière celui-ci, et donc le rail mobile 3 qui lui est lié. A la fin de ce mouvement le joint mobile 50, ménagé dans la partie de moyenne section du piston 48, vient dépasser l'orifice du conduit 49 en démasquant un jeu annulaire entre la petite section du cylindre 15 et le piston 48, ce qui permet au gaz sous pression de pénétrer dans une conduite 52 pour actionner un dispositif d'éjection du missile (non représenté au dessin). Un joint fixe 54 dans le corps de vérin coopère avec la partie de petite section du piston 48. Un tel dispositif d'éjection pourrait, de façon préférée, être celui décrit par la demande de brevet français N°86.05517 de la Société déposante, le vérin 15 faisant alors partie du moyen générateur de gaz sous pression représenté en 28 à la figure 1 de cette demande de brevet français 86.05517.

Un ressort de compression 53, disposé entre les extrémités avant du cylindre du corps du vérin 15 et du piston 48, assure automatiquement le retour vers l'avant du rail mobile 3, et de l'équipage mobile dont il fait partie, lorsque l'arrivée de gaz sous pression par le conduit 49 est interrompue.

A la fin de ce mouvement de retour le conduit 52 est mis en pression minimale par un circuit de retour comportant des passages de petite section 55 et 56 forés dans le piston 48 et qui relient alors les conduits 52 et 49. Un clapet à bille 57, disposé entre les passages 55 et 56, s'oppose au passage de gaz moteur du conduit 49 vers le conduit 52, ce qui permet le mouvement de largage décrit plus haut.

Le fonctionnement du dispositif selon l'invention est le suivant. Le dispositif étant dans la position de la figure 1, avec le connecteur électrique 31 en position relevée et le levier de sécurité 41 en position inactive, on réalise l'accrochage du missile à emporter de la façon déjà expliquée plus haut c'est-à-dire en soulevant le missile sous l'organe porteur 1 de façon que l'oreille 7 du missile soit disposée entre le bec 18 et l'extrémité avant du rail 2 en provoquant par son extrémité arrière l'effacement des butées 11a, 11b (ce qui commande le retrait des coins de calage 12a, 12b), puis en faisant reculer le missile par coulissement de ses oreilles sur les rails 2,3 jusqu'à engagement des butées fixes 10a, 10b (les butées 11a, 11b revenant en position active sous l'effet de leurs ressorts de rappel 19, en déclenchant en même temps le positionnement des coins de calage).

Si le largage du missile ainsi amarré n'est pas prévu dans l'immédiat, on amène alors le levier 41 dans sa position de sécurité représentée à la figure 4 ce qui assure simultanément le blocage de l'équipage mobile dans sa position d'emport par l'action du doigt 43, masque la commande manuelle 21 d'éclipsage des butées 11a, 11b et bloque positivement celles-ci par l'action du pion 44. Si par contre l'avion sous lequel est amarré le missile doit effectuer une mission de largage, on actionne manuellement l'axe 37 du levier 36 pour réaliser la descente du connecteur 31 et sa coopération avec des organes de connection électrique (non représentés) du missile. Pour le largage du missile, l'opérateur commande la décharge de gaz sous pression par le conduit 49 qui produit le déblocage de l'équipage mobile monobloc par remontée du doigt 43 et son glissement vers l'arrière avec, à la fin de cette course, l'actionnement automatique des pistons d'éjection.

On comprendra que la description ci-dessus a été donnée à simple titre d'exemple, sans caractère limitatif, et que des adjonctions ou des modifications constructives pourraient y être apportées sans sortir du cadre de l'invention définie par les revendications qui suivent.

## Revendications

1. Dispositif d'emport sous aéronef et de largage d'une charge telle qu'un missile, avec un organe porteur (1) supportant un équipage mobile (2a, 2b, 3, 4, 5, 17) qui est conçu pour coopérer avec des oreilles d'accrochage (7, 9a, 9b) de la charge et qui peut se déplacer le long de glissières longitudinales avant (13a, 13b) et arrière (14a, 14b) de l'organe porteur (1) alors que des butées (10a, 10b, 11a, 11b) présentées par l'organe porteur et coopérant avec la charge empêchent toute translation de celle-ci en position d'emport et lors de la phase de largage, de sorte que le déplacement de l'équipage mobile dans ses glissières (13a, 13b, 14a, 14b) libère les oreilles (7, 9a, 9b) de la charge d'avec l'équipage mobile (2a, 2b, 3, 4, 5, 17) pour assurer le largage de la charge, caractérisé en ce que l'organe porteur (1) est fixé rigidement à l'aéronef, et en ce que le déplacement dudit équipage mobile (2a, 2b, 3, 4, 5, 17) vers sa position de largage est réalisé par décharge à travers un conduit d'alimentation (49) d'un gaz sous pression sur un piston de commande (48) placé longitudinalement dans l'organe porteur (1), ledit conduit d'alimentation (49) en fin de course de largage étant mis en communication avec un conduit (52) menant à un système d'éjection.

2. Dispositif selon la revendication 1, caractérisé en ce que des coins de calage (12a, 12b) sont associés à l'organe porteur (1) pour agir entre celui-ci et l'oreille équipant la charge, à l'avant et/ou l'arrière de celle-ci.

3. Dispositif selon la revendication 2, caractérisé en ce que les glissières longitudinales avant (13a, 13b) et/ou arrière (14a, 14b) de l'organe porteur (1) présentent une légère inclinaison (α) dans un sens tel que le glissement de largage admette une composante d'écartement de la charge d'avec l'organe porteur (1).

4. Dispositif selon l'une quelconque des revendications précédentes, caractérisé en ce que l'une au moins (11a, 11b) des butées (10a, 10b, 11a, 11b) peut s'éclipser à l'intérieur de l'organe porteur (1) contre l'action d'un ressort de rappel (19), lors de son engagement par une oreille (7) de la charge.

5. Dispositif selon la revendication 4, caractérisé en ce qu'il comprend un organe de commande manuelle (20, 21) de la butée éclipsable (11a).

6. Dispositif selon la revendication 5, caractérisé en ce que ladite commande manuelle (20, 21) de la butée éclipsable (11a) agit sur un organe pivotant (36) commandant un déplacement de retrait d'un organe (31) de connexion électrique.

7. Dispositif selon l'une quelconque des revendications 4 à 6, caractérisé en ce que la butée éclipsable (11a) est reliée par une tringlerie (20, 26, 27, 23, 30) à un coin de calage (12a) pour écarter ledit coin de calage lorsque la butée est éclipsée et laisser revenir ledit coin en position de calage lors de la libération de la butée.

8. Dispositif selon l'une quelconque des revendications précédentes, caractérisé en ce qu'il comprend un levier de sécurité (41) manoeuvrable manuellement et qui comporte un doigt (43) qui, en position de sécurité dudit organe (41), verrouille l'équipage mobile dans sa position d'emport.

9. Dispositif selon les revendications 4 et 8, caractérisé en ce que ledit levier de sécurité (41), présente une saillie (44) qui, dans la position de sécurité dudit levier (41), bloque positivement la butée éclipsable (11a) dans sa position non éclipsée.

10. Dispositif selon l'une quelconque des revendications précédentes, caractérisé en ce que le piston (48) comporte intérieurement un circuit de retour (55, 56) qui, en position du piston correspondant à la position d'emport de l'équipage mobile, met en communication le conduit (52) menant aux système d'éjection et le conduit d'alimentation (49) à travers un clapet à bille (57) qui s'oppose au passage de gaz moteur du conduit d'alimentation (49) vers le conduit (52) menant au système d'éjection.

## Patentansprüche

1. Trage- und Abwurfvorrichtung an einem Flugzeug für Lasten, wie Flugkörper, mit einem Trageelement (1), auf dem ein Schlittenwerk (2a, 2b, 3, 4, 5, 17) angeordnet ist und das zum Zusammenwirken mit Einhängösen (7, 9a, 9b) der Last ausgelegt und entlang vor (13a, 13b) und hinter (14a, 14b) dem Trageelement (1) angeordneten Längsgleitschienen verschieblich ist, während Anschläge (10a, 10b, 11a, 11b) auf dem Trageelement (1) angeordnet sind und mit der Last so zusammenwirken, daß jede Verlagerung derselben in Tragestellung und während der Abwurfphase so verhinderbar ist, daß durch die Verschiebung des Schlittenwerkes in den zugehörigen Gleitschienen (13a, 13b, 14a, 14b) die Einhängösen (7, 9a, 9b) der Last von dem Schlittenwerk (2a, 2b, 3, 4, 5, 17) so lösbar sind, daß der Abwurf der Last gewährleistet ist, dadurch **gekennzeichnet**, daß das Tragelement (1) starr am Flugzeug befestigt ist und daß die Verschiebung des Schlittenwerks (2a, 2b, 3, 4, 5, 17) in dessen Abwurfstellung durch Ablassen eines Druckgases durch eine Zuführleitung (49) auf einen Arbeitskolben (48) erfolgt, der in Längsrichtung im Tragelement (1) angeordnet ist, wobei die Zuführleitung (49) bei Erreichen des Hubendes zum Abwurf mit einer Leitung (52) verbunden ist, die zu einem Auswerfsystem führt.

2. Vorrichtung nach Anspruch 1, dadurch **gekennzeichnet**, daß dem Tragelement (1) Feststellkeile (12a, 12b) so zugeordnet sind, daß eine Einwirkung zwischen diesem und der an der Last vorgesehenen Tragöse vor und/oder hinter der Last gegeben ist.

3. Vorrichtung nach Anspruch 2, dadurch **gekennzeichnet**, daß die vorderen (13a, 13b) und-/oder hinteren (14a, 14b) Längsgleitschienen des Tragelements (1) eine leichte Neigung (a) in einer Richtung in der Weise aufweisen, daß die Gleitbewegung beim Abwurf eine Kraftkomponente zuläßt, die die Last vom Tragelement (1) trennt.

4. Vorrichtung nach einem der vorhergehenden Ansprüche, dadurch **gekennzeichnet**, daß zumindest einer (11a, 11b) der Anschläge (10a, 10b, (10a, 10b, 11a, 11b) entgegen der Wirkung einer Rückstellfeder (19) in das Innere des Tragelement (1) einziehbar ist, wenn mit ihm eine Tragöse (7) der Last in Eingriff steht.

5. Vorrichtung nach Anspruch 4, dadurch **gekennzeichnet**, daß sie ein Betätigungsorgan (20, 21) zur manuellen Betätigung des einziehbaren Anschlags (11a) aufweist.

6. Vorrichtung nach Anspruch 5, dadurch **gekennzeichnet**, daß das Organ (20, 21) zur manuellen Betätigung des einziehbaren Anschlags (11a) auf ein Schwenkteil (36) einwirkt, welches eine Rückziehbewegung eines elektrischen Anschlußteils (31) auslöst.

7. Vorrichtung nach einem der Ansprüche 4 bis 6, dadurch **gekennzeichnet**, daß der einziehbare Anschlag (11a) über ein Gestänge (20, 26, 27, 23, 30) mit einem Feststellkeil (12a) so verbunden ist, daß bei eingezogenem Anschlaß der Feststellkeil abgespreizt und bei Freigabe des Anschlags wieder in die Verkeilstellung rückführbar ist.

8. Vorrichtung nach einem der vorhergehenden Ansprüche, dadurch **gekennzeichnet**, daß sie einen von Hand betätigbaren Sicherheitshebel (41) aufweist, der einen Zapfen (43) trägt, der bei Sicherungsstellung des Hebels (41) das Schlittenwerk in seiner Tragestellung verriegelt.

9. Vorrichtung nach den Ansprüchen 4 und 8, dadurch **gekennzeichnet**, daß der Sicherheitshebel (41) einen Vorsprung (44) aufweist, der bei Sicherungsstellung des Hebels (41) den einziehbaren Anschlag (11a) in seiner ausgefahrenen Stellung positiv feststellt.

10. Vorrichtung nach einem der vorhergehenden Ansprüche, dadurch **gekennzeichnet**, daß der Arbeitskolben (48) in seinem Inneren eine Rückführleitung (55, 56) aufweist, die bei einer Kolbenstellung, die der Tragestellung des Schlittenwerkes entspricht, die zum Auswerfsystem führende Leitung (52) über ein Kugelventil (57) mit der Zuführleitung (49) verbindet, welches dem Übertritt des Betriebsgases von der Zuführleitung (49) zu der zum Auswerfsystem führenden Leitung (52) entgegenwirkt.

## Claims

1. Device for carriage under an aircraft and release of a load such as a missile, and comprising a carrying member (1) supporting mobile equipment (2a, 2b, 3, 4, 5, 17) adapted to cooperate with hooked ears (7, 9a, 9b) on the load and which can move along front (13a, 13b) and rear (14a, 14b) longitudinal slides on the carrying member (1), while stops (10a, 10b, 11a, 11b) provided on the carrying member and cooperating with the load, prevent any translatory motion of said load in the carriage position and during the release phase, wherein displacement of the mobile equipment in its slides (13a, 13b, 14a, 14b) disengages the ears (7, 9a, 9b) of the load from the mobile equipment (2a, 2b, 3, 4, 5, 17) to ensure release of the load, characterised in that the carrying member (1) is rigidly affixed to the aircraft, and in that displacement of said mobile equipment (2a, 2b, 3, 4, 6, 17) towards its releasing position is effected by discharge of pressurised gas through a feed conduit (49) against a control piston (48) located longitudinally in the carrying member (1), at the end of the release stroke said feed conduit (49) being brought into communication with a conduit (52) leading to an ejection system.

2. Device as in Claim 1, characterised in that wedge bars (12a, 12b) are associated with the carrying member (1) to act between the latter and the ear provided on the load at the front and/or rear thereof.

3. Device as in Claim 2, characterised in that the front (13a, 13b) and/or rear (14a, 14b) longitudinal slides of the carrying member (1) have a slight inclination (α) in a direction such that the release sliding movement has a component for separating the load from engagement with the carrying member (1).

4. Device as in any of the preceding claims, characterised in that at least one (11a, 11b) of the stops (10a, 10b, 11a, 11b) may be retracted into the interior of the carrying member (1) against the force of a restoring spring (19) during its engagement by a ear (7) on the load.

5. Device as in Claim 4, characterised by the provision of a manual control member (20, 21) for the retractable stop (11a).

6. Device as in Claim 5, characterised in that said manual control member (20, 21) for the retractable stop (11a) acts on a pivoting member (36) controlling the return movement of an electrical connector member (31).

7. Device as in any of Claims 4-6, characterised in that the retractable stop (11a) is coupled by interconnected levers (20, 26, 27, 23, 30) to a wedge bar (12a) in order to displace said bar when the stop is retracted, and allow said bar to return to wedging position when the stop is released.

8. Device as in any of the preceding claims, characterised in including a manually operable safety lever (41) carrying a finger (43) which in the locked position of said lever (41) locks the mobile equipment in its carrying position.

9. Devices as in Claims 4 and 8, characterised in that said safety lever (41) incorporates a projection (44) which in the safety setting of the lever (41) positively locks the retractable stop (11a) in its non-retracted position.

10. Device as in any of the preceding claims, characterised in that the piston (48) includes an internal return circuit (55, 56) which with the piston in a position corresponding to the carrying position of the mobile equipment brings into communication the conduit (52) leading to the ejection system and the feed conduit (49) by means of a ball-valve (57) which resists flow of propellant gas from the feed conduit (49) towards the conduit (52) leading to the ejection system.

*Fig:1*

*Fig:2*

*Fig:3*

EP 0 296 010 B1

Fig. 4

Fig. 5